# EUROPEAN PATENT APPLICATION

(11) **EP 1 394 662 A1**
(43) Date of publication of application: **03.03.2004**
(21) Application number: 02354122.0
(22) Date of filing: 29.08.2002
(51) Int. Cl.: G06F 1/18

(54) **Cable management component for a computer**

(71) Applicant: Hewlett Packard Company, a Delaware Corporation, Palo Alto, CA 94304 (US)
(72) Inventor: Allirot, Richard, 38240 Meylan (FR); Rollet, Vincent, 38420 ST Jean Le Vieux (FR); Tezenas du Montcel, Cecile, 38100 Grenoble (FR)
(74) Representative: Lloyd, Richard Graham

(57) **Abstract**

The present provides a cable shroud which allows, where required, the integration of a locking device which secures the enclosed cables against release and may be field-installed easily by an end user and further conceals cables protruding from the rear face of a computer or similar device. The cable shroud is releasably engagable with the housing by means of an interlocking mechanism which engages via a sliding action between the shroud and the housing. The engagement in a preferred form is effected by means of opposing lengthwise tab and groove pairs located on the housing and the shroud respectively. The tabs can extend over at least some of the length of the shroud and be adapted to engaged with corresponding slots formed in the rear of the appliance housing. The shroud may be fabricated my plastic injection, or form molding and be capable of conforming with the design of the hardware to which it is attached. While it is envisaged that the invention is particularly suitable for use with small footprint desktop computers, it is also possible that it may be used with servers, routers etc in a variety of dimensions and geometries.

## Description

### Technical Field

The present invention relates to apparatus for managing cables connected to computer hardware. More particularly, although not exclusively, the invention relates to an improved cable management component for personal computers that have many peripheral cables as well as power cables connected to them.

### Background Art

When considering the historical evolution in the physical construction of computer hardware, it is clear that there have been dramatic improvements in the ability to package more and more functionality into ever decreasing chassis volumes. For example, in the 80's the form-factor of personal desktop computers concentrated on low-profile chassis and mini-tower units. Given the state of miniaturization at the time, these devices were relatively bulky, heavy and often left in place once installed. Thus, cabling connected to the rear face of these machines could, if not be ignored, at least be bundled at the back of a desk or adjacent a wall and kept from view.

Another aspect of early personal computer hardware was the relatively limited selection of peripheral devices to which they could be connected.

For example, a typical desktop computer might have cable for power, a printer, mouse, keyboard, monitor and perhaps a network connection. In situations where a tower or low-profile computer was semi-permanently located adjacent a users work area, cables for these devices could be routed relatively easily and without significant aesthetic or practical disadvantage.

However, with developments in miniaturization and improvements in PCB fabrication techniques, computer hardware has evolved to a point where the physical form-factor is essentially governed by the PC's context, application or by purely aesthetic considerations. An example of such a small form-factor PCs is described in the applicants copending application US 2001/0014008A1, the disclosure of which is incorporated by reference.

Also, as computer design has become less constrained by physical requirements of the hardware, arguably the distinction between computer and peripheral is itself becoming blurred. In particular, this process has been accelerated with the increase in the variety of USB peripheral devices. This allows devices such as hard disk drives, CD writers and modems to be treated essentially as "networked" peripherals.

A result of this is that aesthetics and usability are now significant determinants in consumer acceptance. However, while the computer chassis, disk drives and printers all can be designed according to a selected design brief, it is still necessary to connect the components of the hardware system.

In this regard, one area which has remained firmly tied to the 80's style of hardware is cable management and it is this with which the present invention is concerned.

Wireless communication systems such as Bluetooth or infra-red (IR) can, to a degree, reduce reliance on physical wired connections. However, these solutions are relatively expensive and in the case of IR require line-of-sight to operate. It is also necessary to at least provide a power connection to the computer. Therefore, it is anticipated that cabling between computer components is a factor that will remain significant for quite some time.

Another problem posed by the proliferation of USB devices is in the wide availability of high-value USB devices. For example, it is common to attach high value items such as digital cameras, PDAs and CD writers to the USB bus. This raises the risk of such items being removed from the PC. It would therefore be an advantage to be able to secure cabled devices to the rear of the computer.

As discussed in the applicant's copending application EP 1 126 361 A1, an important aspect of PC design is how to accommodate rear-mounted cabling for a small-footprint desktop computer. The design of these types of computer is such that they are often located immediately adjacent the users monitor or on a common desktop area without the usual concealing effect of an adjacent wall or floor-mounted location under a desk. The profusion of printer, network and peripheral cabling is unsightly and can significantly detract from the aesthetics of the computer hardware. A disorganized mass of cables can also pose a hardware risk should the wrong cable be accidentally removed from a computer during maintenance.

A number of solutions have been proposed including the applicants abovementioned application which describes a cable shroud intended to conceal and secure cables attached to the rear face of a small form-factor computer. However such devices have met with mixed success. Most of the simpler prior art cable shrouds, including that described in EP 1 126 361 A1 use a protruding hook arrangement formed in the shroud. The hooks engage with corresponding holes formed in the rear face of the computer chassis and engage by the weight of the shroud holding the hooks in engagement with the holes or by means of a mechanical locking mechanism. The reader is referred to the abovementioned application for a detailed explanation of this and other prior art techniques.

These solutions are however not ideal and, with reference to EP 1 126 361 A1, it has been found that the method of attaching the cable shroud can be awkward and difficult in practice. Attaching the shroud requires that all of the hooks be simultaneously aligned with their corresponding holes while the cable bundle is positioned in place behind the shroud.

It is an object of the present invention therefore to provide a simpler, more efficient means of attaching a cable shroud which is robust, easily fabricated and simple to position even for large and awkward cable bundles. The shroud should still be aesthetically pleasing or at least be adaptable to the design look and feel of the computer as well as allowing for the required cooling and, where necessary, incorporate locking functionality for the shroud itself as well as for peripheral devices connected via cables to the computer.

### Disclosure of the Invention

The present invention ameliorates the abovementioned difficulties by providing a cable shroud which allows optionally, where required, the integration of a locking device which secures the enclosed cables against release and may be field-installed easily by an end user.

Thus in one aspect the invention provides for an electronic appliance, such as a personal computer, including a housing having at least one external socket, and a cable shroud that is releasably engagable to the housing by means of an interlocking mechanism which engages via a sliding action between edges of the shroud and the housing.

The engagement is preferably effected by means of corresponding lengthwise tab and groove pairs located on the housing and the shroud respectively.

The tabs may extend over at least some of the length of the shroud and be adapted to engaged with corresponding slots formed in the rear of the appliance housing.

Preferably the cable shroud is in the form of a one-piece part of plastics material and comprises a plurality of rigid walls defining a cavity, and at least one opening for allowing a plurality of cables to exit the cavity.

In an alternative embodiment, the cable shroud is in the form of a curved shell-like member having lengthwise engagement edges adapted to engage the housing in a sliding action which engages the lengthwise tabs and their corresponding grooves wherein the shell-like shape defines a cavity and further includes at least one opening for allowing a plurality of cables to exit the cavity.

The cable shroud may incorporate a locking device adapted, when the shroud is in position on the housing, to collocate with a means whereby the locking device operates to lock the shroud to the housing.

In a preferred embodiment, the cable shroud is in the form of a longitudinally concave elongate shell, closed at one end and open at the other thereby forming a shroud which, when mounted in place on a housing the open end provides an exit aperture for a plurality of cables.

Preferably, the dimensions of the shroud are such that when it is slid into the engaged position it is not possible to manually disengage one or more of the cables from the at least one socket in the housing.

In an alternative embodiment, the shroud may obscure only a subset of sockets in the housing thereby allowing one or more cables to be manually detached from their corresponding sockets.

In a further aspect, the invention provides for a cable shroud adapted for use with the electronic appliance as hereinbefore defined.

### Brief Description of the Drawings

The present invention will now be described by way of example only and with reference to the drawings in which:
- Figure 1:: illustrates an elongate shell-like cable shroud detached from a computer;
- Figure 2:: illustrates a plan view of the cable shroud of figure 1;
- Figure 3:: illustrates a simplified perspective view of a cable shroud being attached to a computer; and
- Figure 4:: illustrates a simplified perspective view of a computer with a cable shroud attached.

### Best Mode for Carrying Out the Invention

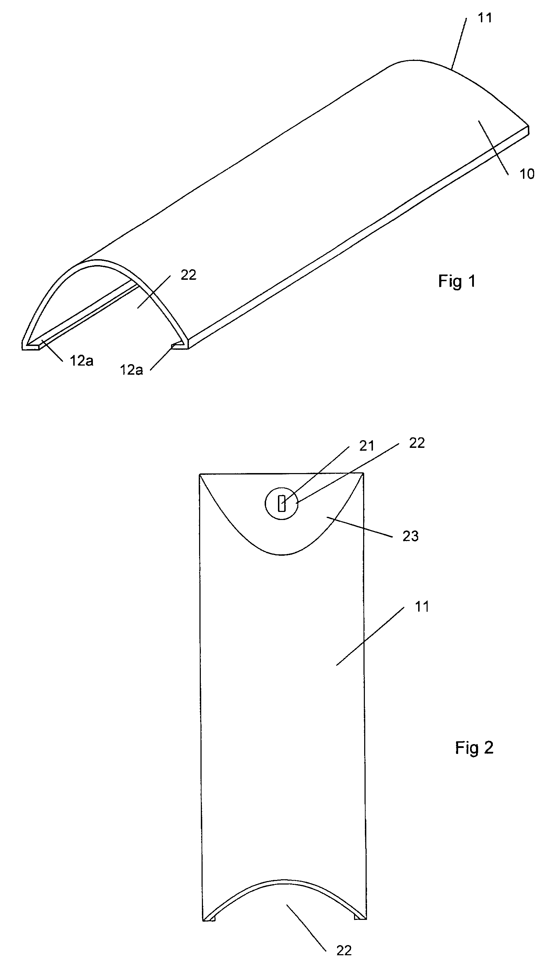

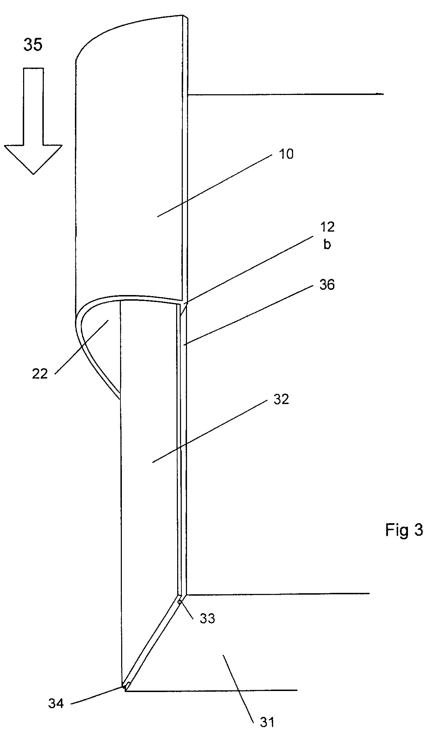

Referring to Figure 1, a cable shroud 10 is shown detached from an electronic appliance 30 in figure 3. Here, the electronic appliance may be a personal computer, server, router or other device which might have attached thereto a plurality of cables. For brevity, the following description will describe the example of a small footprint desktop computer. However, the invention is not to be construed as limited to such an embodiment.

The computer includes a housing 30 having at least one external socket (not shown), and a cable shroud 10 that is releasably engagable to the housing by means of an interlocking mechanism 12a/12b and 34/36 which engages via a sliding action between the shroud 10 and the housing 30.

In the preferred embodiment shown, the engagement is effected by means of corresponding lengthwise tab and groove pairs 12a/12b and 34/36 respectively located on the housing 30 and the shroud 10 respectively.

The tabs 12a/12b may extend over at least some of the length of the shroud 10 and be shaped to engaged with corresponding slots 34/36 formed in the rear face 32 of the appliance housing 30. In the present embodiment, the tabs are shown as longitudinal tabs extending over the entire length of the shroud 10. In an alternative embodiment, the tabs may only extend over a limited length of the shroud. For example the tabs may be in the form of unitary tab elements of substantially shorter longitudinal length than the tabs shown in figures 1 and 2, and be capable of engagement with the slots 34/36 by a similar sliding action illustrated in figure 3.

The cable shroud 10 may be fabricated in the form of a one-piece part of plastics material and comprises a plurality of rigid walls defining a cavity, and at least one opening 22 for allowing a plurality of cables 41/42 to exit the cavity.

In the preferred embodiment illustrated, the cable shroud 10 is manufactured in the form of a curved shell-like member having lengthwise engagement edges 12a/12b adapted to engage with the housing 10 in a sliding action. This action engages the lengthwise tabs 12a/12b and their corresponding grooves 34/36 wherein the shell-like shape defines a cavity. At least one opening 22 is provided for allowing cables to exit the cavity.

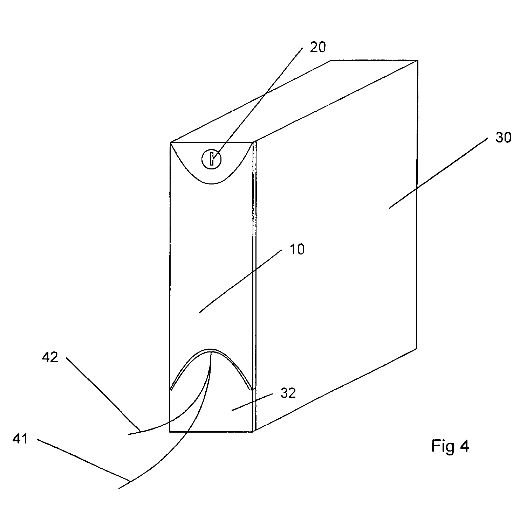

Referring to figures 2 and 4, the cable shroud 10 may incorporate a locking device 20 which is adapted so that when the shroud is in position on the housing, it can be operated to engage with a locking means (concealed by the shroud 10). A suitable locking mechanism is that which is conventionally used to secure a computer housing to a computer chassis. The locking device may be operated by means of a key recess 21 and may include a lock barrel mechanism or simply incorporate a rotating tab which can be moved in or out of engagement with a suitable formed part of the chassis.

As shown in the figures, when the shroud is located in place, the dimensions of the shroud 10, particularly with respect to the opening 22, are such that it is very difficult of not impossible to manually disengage one or more of the cables from their sockets.

While the preferred embodiment shows the shroud obscuring all of the sockets, it may be desirable to obscure only a subset of sockets in the housing. This would allow the removal of selected cables without unlocking and removing the shroud.

The embodiment shown in the figures is shaped in an elongate curved shell-like form. However, other geometries are possible constrained primarily by the tab/groove engagement mechanism and the design of the computer chassis in general. It has been found that the design of the shroud and the attachment mechanism lends itself well to a variety of designs. For example, it may be possible to mould the shroud to conform to the computer housing so that the device as a whole has a uniform appearance without the usual profusion of cables leading from the rear chassis face.

Although the invention has been described by way of example and with reference to particular embodiments it is to be understood that modification and/or improvements may be made without departing from the scope of the appended claims.

Where in the foregoing description reference has been made to integers or elements having known equivalents, then such equivalents are herein incorporated as if individually set forth.

## Claims

1. An electronic appliance including a housing having at least one external socket, and a cable shroud that is releasably engagable with the housing by means of an interlocking mechanism which engages via a sliding action between the shroud and the housing.

2. An electronic appliance as claimed in claim 1 wherein the engagement is effected by means of corresponding lengthwise tab and groove pairs located on the housing and the shroud respectively.

3. An electronic appliance as claimed in claim 2 wherein the tabs extend over at least some of the length of the shroud and are adapted to engaged with corresponding slots formed in the rear of the appliance housing.

4. An electronic appliance as claimed in claim 1 wherein the cable shroud is in the form of a one-piece part of plastics material and comprises a plurality of rigid walls defining a cavity, and at least one opening for allowing a plurality of cables to exit the cavity.

5. An electronic appliance as claimed in claim 1 wherein the cable shroud is in the form of a curved shell-like member having lengthwise engagement edges adapted to engage the housing in a sliding action which engages the lengthwise tabs and their corresponding grooves wherein the shell-like shape defines a cavity and further includes at least one opening for allowing a plurality of cables to exit the cavity.

6. An electronic appliance as claimed in any preceding claim wherein the cable shroud incorporates a locking device adapted, when the shroud is in position on the housing, to collocate with a means whereby the locking device operates to lock the shroud to the housing.

7. An electronic appliance as claimed in any preceding claim wherein the cable shroud is in the form of a longitudinally concave elongate shell, closed at one end and open at the other thereby forming a shroud which, when mounted in place on a housing the open end provides an exit aperture for a plurality of cables.

8. An electronic appliance as claimed in any preceding claim wherein the dimensions of the shroud are such that when it is slid into the engaged position it is not possible to manually disengage one or more of the cables from the at least one socket in the housing.

9. An electronic appliance as claimed in any preceding claim wherein the shroud obscures only a subset of sockets in the housing thereby allowing one or more cables to be manually detached from their corresponding sockets.

10. A cable shroud in the form of a one-piece part of plastics material and comprising a plurality of rigid walls defining a cavity, and at least one opening for allowing a plurality of cables to exit the cavity wherein the cable shroud is adapted to engage with an electronic appliance by means of an interlocking mechanism which engages via a sliding action between the shroud and a housing of the appliance.

11. A cable shroud as claimed in claim 10 wherein the shroud is in the form of a curved shell-like member having lengthwise engagement edges adapted to engage the housing in a sliding action which engages the lengthwise tabs and their corresponding grooves wherein the shell-like shape defines a cavity and further includes at least one opening for allowing a plurality of cables to exit the cavity.

12. A cable shroud as claimed in claim 10 or 1 further incorporating a locking device adapted, when the shroud is in position on the housing, to collocate with a means whereby the locking device operates to lock the shroud to the housing.
